Europäisches Patentamt

European Patent Office

Office européen des brevets

(11) Veröffentlichungsnummer : **0 090 767
B1**

## (12) EUROPÄISCHE PATENTSCHRIFT

(45) Veröffentlichungstag der Patentschrift :
27.05.87

(51) Int. Cl.⁴ : **C 01 F  7/02**, C 01 F  7/44

(21) Anmeldenummer : **83810110.3**

(22) Anmeldetag : **17.03.83**

(54) **Verfahren zur Herstellung von grobkristalliner Tonerde.**

(30) Priorität : **29.03.82 CH 1911/82**

(43) Veröffentlichungstag der Anmeldung :
**05.10.83 Patentblatt 83/40**

(45) Bekanntmachung des Hinweises auf die Patenterteilung : **27.05.87 Patentblatt 87/22**

(84) Benannte Vertragsstaaten :
**AT CH DE FR GB IT LI NL SE**

(56) Entgegenhaltungen :
**EP-A- 0 048 691
DE-B- 2 850 064
FR-A- 2 235 086
GB-A- 1 358 716**

(73) Patentinhaber : **SCHWEIZERISCHE ALUMINIUM AG
CH-3965 Chippis (CH)**

(72) Erfinder : **Meyer, Klaus
Kamorstrasse 12
CH-8200 Schaffhausen (CH)**

## Beschreibung

Die vorliegende Erfindung betrifft ein Verfahren zur Herstellung grobkristalliner Tonerde, die sich nach Aufbereitung in an sich bekannter Weise vorteilhaft als Schleif-, Läpp- und Poliermittel oder für Feuerfestzwecke eignet.

In der Schleifmittelindustrie besteht ein starkes Bedürfnis nach einkristallinen Korundkörnungen im Bereich von etwa Körnungsnummer 800 bis 200 nach FEPA*, entsprechend mittlerer Kristallitgrössen von ca. 10-70 μm.

Auf die grundsätzliche Möglichkeit, die gewünschten Korundeinkristalle direkt bei der Tonerdeproduktion herzustellen, um damit den sowohl technisch wie wirtschaftlich aufwendigen Weg über Schmelz- und Sinterprozesse zu umgehen, ist bereits mehrfach hingewiesen worden. Bisher scheiterten alle wirtschaftlich vertretbaren Bemühungen an der unzureichenden Grösse des Kristalle und/oder ihrem ausgesprochen dünntafeligen Habitus.

Die vorliegende Erfindung überwindet diese Schwierigkeiten. Die erfindungsgemässe Tonerde besteht aus dicktafeligen, von natürlichen Flächen begrenzten Korundeinkristallen im oben angeführten Korngrössenbereich und lässt sich kostengünstig herstellen.

Tonerde wird grosstechnisch üblicherweise nach dem Bayer-Verfahren produziert. Durch Aufschluss von Bauxit in Natronlauge und anschliessende Fällung wird Aluminiumhydroxid in Form von Agglomeraten der Grösse bis um 100 μm erhalten. Durch Kalzination in Dreh- oder Wirbelschichtöfen wird das Aluminiumhydroxid in Tonerde überführt.

Derartig hergestellte Tonerden sind für den oben genannten Verwendungszweck nicht oder nur sehr beschränkt, z. B. als Poliermittel, einsetzbar.

Es hat nicht an Versuchen gefehlt, dennoch über das Bayer-Verfahren zu Tonerdeprodukten zu gelangen, die insbesondere Schleif- und Läppeigenschaften aufweisen. Es ist bekannt, dass die Zugabe von sogenannten Kalzinationshilfsmitteln oder Mineralisatoren in kleinen Mengen die Umwandlung zum $\alpha$-Aluminiumoxid beschleunigt und/oder die Umwandlungstemperatur senkt. Gleichzeitig findet eine Verschiebung der kristallitgrössenverteilung zu grösseren Partikeln hin statt.

Wirksam sind in diesem Zusammenhang einzeln oder kombiniert Halogenide, insbesondere die Fluoride NaF, $CaF_2$, $AlF_3$ und $Na_3AlF_6$, Bor-, Vanadin- und Phosphorverbindungen (z. B. DE-AS 10 41 853, DE-AS 11 59 418, DE-AS 17 67 511, DE-OS 26 23 482). Nach der DE-AS 11 59 418 haben einige Zehntel Prozent Fluorwasserstoffgas in der Ofenatmosphäre die gleiche Wirkung.

Je nach Durchlauf- bzw. Aufheizgeschwindigkeit und Art und Menge der Fluorverbindungen kann die Temperatur der Umwandlung zum $\alpha$-Aluminiumoxid und dessen Kristallitgrösse im beschränkten Rahmen variiert werden.

Nach der DE-AS 28 50 064 können durch Mehrfachkristallisation unter Verwendung von Impfgut — bestehend aus bereits kalziniertem Produkt —, fluorhaltigen Zusätzen und Aluminiumhydroxidagglomeraten > 60 μm Korundkristalle, $\alpha$-$Al_2O_3$, mit Durchmessern. D als grösste Ausdehnung senkrecht zur c-Achse von 16 bis maximal 250 μm bei Durchmesser/Höhen-Verhältnissen D/H zwischen 3 und 7 hergestellt werden, wobei die Höhe H die grösste Ausdehnung parallel zur c-Achse bedeutet.

Nach Verfahren, die keine Impfkristalle verwenden, wurden bisher nur $\alpha$-$Al_2O_3$-Kristalle von ausgesprochen dünntafeligem, hexagonalem Habitus erhalten. Die Kristalle haben bestenfalls einen Durchmesser D von 25 μm, grösstenteils jedoch nur einen solchen von um 10 μm. Die Höhe H beträgt bei ausgesuchten Exemplaren etwa ein Viertel des Durchmessers D und bei über 80 % der Kristalle liegt diese nur zwischen ein Sechstel bis ein Zehntel des Durchmessers D.

Der Nachteil derartiger Kristalle für Schleif-, Läpp- und Polierzwecke liegt in der zu kleinen Kristallitgrösse und/oder vor allem in dem hohen Durchmesser zu Höhen-Verhältnis D/H. Plättchenförmige Korundeinkristalle unter einem Durchmesser von 10 μm werden kaum von der oberflächenbearbeitenden Industrie gebraucht. Kristalle mit grösseren Durchmessern aber hohem D/H-Verhältnissen zerbrechen während des Einsatzes als Schleifmittel, besonders beim Läppen und Polieren, sehr leicht und bilden dann Schneiden von willkürlicher Geometrie. Der vermeintliche Vorteil der einkristallinen Körnung mit bei allen Kristallen konstanter Schneidengeometrie wegen der natürlichen Flächenausbildung und der hohe spezifische Schneidkantenanteil wird mindestens teilweise zunichte gemacht.

Aus diesem Grunde haben über die Kalzination von Aluminiumhydroxid hergestellte Tonerdeprodukte bisher nicht den erwarteten Eingang in der Oberflächenbearbeitungstechnik gefunden.

Ziel der Erfindung ist es, ein vorteilhaftes einkristallines Schleif-, Läpp- und Poliermittel aus kalzinierter Tonerde zu schaffen. Insbesondere sollen die Kristalle im Mittel einen Durchmesser D von etwa grösser/gleich 10 μm haben und gleichzeitig ein kleines D/H-Verhältnis aufweisen.

« Die Erfindung betrifft ein Verfahren zur Herstellung grobkristalliner Tonerde, $\alpha$-$Al_2O_3$, mit mittleren Kristallitdurchmessern von grösser/gleich 10 μm durch Kalzination, dadurch gekennzeichnet, dass als Edukt beladene Tonerde aus Trockenadsorptionsreinigungsanlagen der Aluminiumschmelzflusselektrolyse eingesetzt wird. »

---

* Fédération européenne des fabricants de produits abrasifs

Unter Trockenadsorptionstonerde wird die in der Aluminiumindustrie während der Elektrolyse verwendete Tonerde zur trockenen Reinigung der Abgase (Gas, Dampf, Staub) verstanden. Mit beladener Trockenadsorptionstonerde ist die Tonerde gemeint, die bereits zur Abgasreinigung eingesetzt worden ist und somit alle Verunreinigungen aus dem Reinigungsprozess enthält.

Der Reinigungsprozess läuft etwa nach folgendem Schema ab : Die während der Aluminiumelektrolyse flüchtigen Bestandungen sowie geringere Anteile weiterer Elemente in Form von Verbindungen, werden mittels Trockenadsorptionstonerde adsorbiert. Die beladene Tonerde geht dann in die Elektrolysezellen, wobei Natrium und Fluor fast vollständig wieder ins Elektrolysebad zurückgeführt werden, was sehr erwünscht ist, aber auch die Verunreinigungen, die sich von Kreislauf zu Kreislauf anreichern und somit die Qualität des Aluminiums verschlechtern.

Allgemein erfolgt die Klassierung der Tonerden aufgrund ihrer physikalischen Eigenschaften im wesentlichen in zwei Hauptgruppen, nämlich die sogenannte sandige (sandy) und mehlige (floury) Tonerde. Die Worte sandig und mehlig weisen auf ein typisches Verhalten der entsprechenden Tonerde hin. Neben den beiden Hauptgruppen gibt es sogenannte intermediäre Tonerden, die teilweise Eigenschaften der einen und der anderen vorgenannten Tonerde aufweisen.

Die Merkmale, welche die intermediäre Tonerde von der sandigen Tonerde unterscheiden, sind ein hoher Anteil Feinanteil, d. h. Anteil kleiner/gleich 44 $\mu$m, und eine starke Neigung zur Staubentwicklung.

Wenn bei der mehligen Tonerde der Kalzinationsgrad hoch und demzufolge Glühverlust und spezifische Oberfläche (nach BET) niedrig sind — Glühverlust unter 0,25 %, spezifische Oberfläche 1-2 m$^2$/g —, ist bei der sandigen Tonerde der Kalzinationsgrad niedriger. Der Glühverlust liegt bei etwa 0,5-1 % und die spezifische Oberfläche (nach BET) etwa zwischen 30 und 60 m$^2$/g.

Ueblicherweise werden für Trockenadsorptionszwecke bei der Aluminiumelektrolyse nur Tonerden mit derartig hohen spezifischen Oberflächen (nach BET) eingesetzt. Je nach Kalzinationsbedingen zeigen diese Tonerden einen Anteil an $\alpha$-Al$_2$O$_3$ (Korund) zwischen ca. 10-60 %. Bevorzugt werden jedoch Tonerden mit einem $\alpha$-Al$_2$O$_3$-Gehalt von 6-15 %.

Nach Einsatz von für Trockenadsorptionszwecke in der Aluminiumschmelzflusselektrolyse geeigneten Trockenadsorptionstonerden ergeben diese beladenen Trockenadsorptionstonerden beispielsweise Analysen, wie sie Tabelle I zeigt (Gew.-%) :

### Tabelle I

| Trockenadsorbtionstonerden beladen | % | | | | | ppm | | | | |
|---|---|---|---|---|---|---|---|---|---|---|
| | Na | F | Si | Ti | Cr | V | P | Ga | Fe |
| I | 1-3 | 4,3 | 200 | 60 | 5-10 | 300 | 80 | 300 | 300 |
| II | 1 | 0,5 | 250 | 40 | 1-5 | 200 | 80 | 500 | 500 |
| III | 0,6 | 0,76 | 80 | 150 | — | 60 | 200 | 80 | 500 |

Der Beladungsgrad ist selbstverständlich von der Einsatzzeit der Trockenadsorptionstonerde abhängig.

Da die beladene Trockenadsorptionstonerde üblicherweise der Aluminiumschmelzflusselektrolyse zugeführt wird — zwischenlagern der beladenen Trockenadsorbtionstonerde und/oder diskontinuierliche Zufuhr dieser Tonerde zur Elektrolyse bzw. zum Tonerdebehälter am Elektrolyseofen —, streben die Hüttenleute, um eine diskontinuierliche Verunreinigung im Elektrolysebad zu vermeiden, meist niedrige Verunreinigungsgehalte der Trockenadsorptionstonerde an.

In der weiteren Ausgestaltung der Erfindung hat sich gezeigt, dass es je nach Beladungsgrad und gewünschter Kristallitgrösse des Endprodukts zweckmässig sein kann, dennoch Mineralisatoren und/oder Kristallisationspromotoren der beladenen Trockenadsorptionstonerde zuzugeben. Insbesondere hat sich als Mineralisator eine Verbindung vom Typ X(BF$_4$)$_n$ verwendet wird, wobei X für NH$_4$ und metallische Elemente insbesondere 1- und 2-wertige steht und n die formale Wertigkeit von X ist.

Andererseits liegt es im Rahmen der Erfindung, beladene Trockenadsorbtionstonerde als Mineralisator bzw. Kristallisationshilfsmittel bei den eingangs genannten Verfahren zur Herstellung von grobkristalliner Tonerde, die Aluminiumhydroxid verwenden, einzusetzen.

Weitere Vorteile, Merkmale und Einzelheiten der Erfindung ergeben sich aus der nachfolgenden Beschreibung bevorzugter Ausführungsbeispiele.

Jeweils 50 g-Chargen wurden 2 Stunden bei 1 300 °C stationär in einem Silitstabofen kalziniert. Als Ausgangsprodukt wurde für alle Versuche schwach beladene Trockenadsorptionstonerde (III, Tabelle I) verwendet.

Die Ergebnisse von den durchgeführten Laborversuchen sind in Tabelle II zusammengefasst.

3

Tabelle

| Versuch | Educt Zusammensetzung | | | Mineralisator | Produkt Kristallgrösse in μm (mittlerer Durchmesser) |
|---|---|---|---|---|---|
| 1 | 100 | % | TA-Tonerde | — | 15 |
| 2 | 70 | % | TA-Tonerde/30 % Al(OH)$_3$ | — | 12 |
| 3 | 50 | % | TA-Tonerde/50 % Al(OH)$_3$ | — | 12 |
| 4 | 30 | % | TA-Tonerde/70 % Al(OH)$_3$ | — | 10 |
| 5 | 10 | % | TA-Tonerde/90 % Al(OH)$_3$ | — | 5 |
| 6 | 99 | % | TA-Tonerde | 1 % AlF$_3$ | bis 100 |
| 7 | 99 | % | TA-Tonerde | 1 % NH$_4$BF$_4$ | bis 60 |
| 8 | 98.8 | % | TA-Tonerde | 0.6 % Na$_3$AlF$_6$/0.6 % B$_2$O$_3$ | bis 60 |
| 9 | 99 | % | TA-Tonerde | 1 % KBF$_4$ | bis 100 |
| 10 | 30 | % | TA-Tonerde/69 % Al(OH)$_3$ | 1 % NaBF$_4$ | 20 |
| 11 | 10 | % | TA-Tonerde/89 % Al(OH)$_3$ | 1 % NaBF$_4$ | 15 |

Die Zusammensetzung des Produkts aus Versuch 1 gibt Tabelle III wieder. Die Produkte aller Versuche bestanden aus Agglomeraten von dicktafeligen α-Al$_2$O$_3$ Kristallen mit einem D/H-Verhältnis von 1-3. Ein typisches Agglomeratkorn zeigt Bild 1 in 600-facher Vergrösserung.

Tabelle III

| Produktionsversuch 1 | |
|---|---|
| Na | 0,5 % |
| Fe | 400 ppm |
| Si | 60 ppm |
| Ti | 100 ppm |
| Ga | 80 ppm |
| Ni | 25 ppm |
| V | 30 ppm |
| P | 80 ppm |
| F | — |

Wie auf Bild 1 oben zu sehen ist, wiesen die Kristalle teilweise schraubenförmiges Wachstum auf, was darauf hinweisen mag, dass das Wachstum noch nicht abgeschlossen ist.

Erstaunlicherweise tritt die Bildung der β-Phase von Al$_2$O$_3$, NaO · 11 Al$_2$O$_3$, praktisch nicht auf, obwohl bei Prozessbeginn meist ein hoher Alkaligehalt vorliegt. Das kalzinierte Endprodukt aus dem erfindungsgemässen Verfahren bestand nach röntgenographischen Untersuchungen praktisch nur aus Korund, α-Al$_2$O$_3$. Die β-Al$_2$O$_3$-Interferenz 002 (CuK α, d = 1,13 nm (11,3 Å)) war in allen Mustern, wenn überhaupt, nur schwach sichtbar. Ansonsten sind die Kristalle klar und ohne Inhomogenitäten. Die α-Al$_2$O$_3$-Interferenzen der Röntgendiffraktogramme waren alle scharf, was als Kennzeichen defektfreier Kristalle gewertet wird.

Durch Erhöhung des Beladungsgrades der Trockenadsorbtionstonerde ist zu erwarten, dass die α-Al$_2$O$_3$-Kristalle wesentlich grösser ausfallen.

In an sich bekannter Weise werden die Agglomerate desagglomeriert und in einkristalline Fraktionen getrennt. Sie sind als Polier-, Läpp- und Schleifmittel einsetzbar.

Das erfindungsgemässe Verfahren bietet neben den technischen insbesondere auch wirtschaftliche Vorteile : Durch Verwendung der beladenen Trockenadsorbtionstonerde als Ausgangsprodukt zur Herstellung von grobkristalliner Tonerde erübrigt sich die Zugabe von teuren, zusätzliche Verfahrensoperationen notwendig machenden Kalzinationshilfsmitteln und/oder Mineralisatoren. Durch Ausgliedern mindestens eines Teils der beladenen Trockenadsorbtionstonerde aus dem Aluminiumherstellungsprozess wird die Verunreinigung des Aluminiums gemindert.

**Patentansprüche**

1. Verfahren zur Herstellung grobkristalliner Tonerde, α-Al$_2$O$_3$, mit mittleren Kristallitdurchmessern von grösser/gleich 10 μm durch Kalzination, dadurch gekennzeichnet, dass als Edukt beladene Tonerde aus Trockenadsorptionsreinigungsanlagen der Aluminiumschmelzflusselektrolyse eingesetzt wird.

2. Verfahren zur Herstellung grobkristalliner Tonerde nach Anspruch 1, dadurch gekennzeichnet, dass der beladenen Tonerde Mineralisatoren, insbesondere fluor- und/oder borhaltige, zugesetzt werden.

3. Verfahren zur Herstellung grobkristalliner Tonerde nach Anspruch 1 oder 2, dadurch gekennzeichnet, dass der beladenen Tonerde Aluminiumhydroxid zugesetzt wird.

4. Verfahren zur Herstellung grobkristalliner Tonerde nach Anspruch 2, dadurch gekennzeichnet, dass als Mineralisator die Verbindung $X(BF_4)_n$ verwendet wird, wobei X für $NH_4$ und metallische Elemente, insbesondere Na und K, steht und n die formale Wertigkeit von X ist.

5. Verfahren zur Herstellung grobkristalliner Tonerde nach Anspruch 3, dadurch gekennzeichnet, dass der Anteil an beladener Tonerde mehr als 10 % beträgt.

## Claims

1. Process for the production of large crystalline alumina, $\alpha$-$Al_2O_3$, with mean crystalline grain diameters greater than or equal to 10 $\mu$m by calcination, characterised in that as educt there is used charged alumina from dry adsorption purification installations of aluminium fusion electrolysis.

2. Process for the production of large crystalline alumina according to claim 1, characterised in that mineralisers, especially containing fluorine and/or boron, are added to the charged alumina.

3. Process for the production of large crystalline alumina according to claim 1 or 2, characterised in that aluminium hydroxide is added to the charged alumina.

4. Process for the production of large crystalline alumina according to claim 2, characterised in that as mineraliser there is used the compound $X(BF_4)_n$, wherein X stands for $NH_4$ and metallic elements, especially Na and K, and n is the formal valency of X.

5. Process for the production of large crystalline alumina according to claim 3, characterised in that the proportion of charged alumina amounts to more than 10 %.

## Revendications

1. Procédé pour la fabrication d'alumine en gros cristaux, $Al_2O_3$ $\alpha$, ayant des diamètres moyens de cristallites supérieurs ou égaux à 10 $\mu$m par calcination, caractérisé en ce que l'on utilise comme produit de départ de l'alumine chargée provenant d'installations de purification par adsorption à sec de l'électrolyse d'aluminium à l'état fondu.

2. Procédé pour la fabrication d'alumine en gros cristaux selon la revendication 1, caractérisé en ce que l'on ajoute à l'alumine chargée des minéralisateurs, en particulier contenant du fluor et/ou du bore.

3. Procédé pour la fabrication d'alumine en gros cristaux selon la revendication 1 ou 2, caractérisé en ce que l'on ajoute à l'alumine chargée de l'hydroxyde d'aluminium.

4. Procédé pour la fabrication d'alumine en gros cristaux selon la revendication 2, caractérisé en ce que l'on utilise comme minéralisateur le composé $X(BF_4)_n$, dans lequel X représente $NH_4$ et des éléments métalliques, en particulier Na et K, et n est la valence formelle de X.

5. Procédé pour la fabrication d'alumine en gros cristaux selon la revendication 3, caractérisé en ce que la proportion d'alumine chargée est de plus de 10 %.